# FASCICULE DE BREVET EUROPEEN

(11) **EP 3 914 866 B1**
(45) Date de publication et mention de la délivrance du brevet: **12.06.2024**
(21) Numéro de dépôt: 20705428.9
(22) Date de dépôt: 22.01.2020
(51) Int. Cl.: F25B 5/04, F25B 6/04, F25B 40/02, F25B 40/06, F25B 40/00

(54) **CIRCUIT DE CLIMATISATION DE VEHICULE AUTOMOBILE ET PROCEDE DE GESTION ASSOCIE**
KLIMAANLAGE EINES KRAFTFAHRZEUGS UND ZUGEHÖRIGES VERWALTUNGSVERFAHREN
MOTOR VEHICLE AIR CONDITIONING CIRCUIT AND ASSOCIATED MANAGEMENT METHOD

(30) Priorité: 25.01.2019 FR 1900687
(43) Date de publication de la demande: 01.12.2021
(73) Titulaire: Valeo Systemes Thermiques, 78320 Le Mesnil-Saint-Denis (FR)
(72) Inventeur: YAHIA, Mohamed, 78322 Le Mesnil-Saint-Denis (FR); NICOLAS, Bertrand, 78322 Le Mesnil-Saint-Denis (FR)
(74) Mandataire: Valeo Systèmes Thermiques
(86) Numéro de dépôt international: PCT/FR2020/050082
(87) Numéro de publication internationale: WO 2020/152420

(56) Documents cités:
- WO-A1-2017/212158
- FR-A1- 3 026 478
- FR-A1- 3 036 744

## Description

L'invention se rapporte à un circuit de climatisation de véhicule automobile.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est à dire qu'il peut utiliser un mode de fonctionnement pompe à chaleur dans lequel il est apte à absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un condenseur interne dédié disposé dans le flux d'air interne et permettant de chauffer ledit flux d'air interne.

Le circuit de climatisation comprend ainsi une architecture particulière permettant de choisir dans quel échangeur de chaleur le fluide réfrigérant passe afin de définir son mode de fonctionnement.

Le circuit de climatisation peut également être relié à un circuit annexe dans lequel circule un fluide caloporteur. Ce circuit annexe peut par exemple permettre la gestion thermique de batteries et/ou de moteurs électrique, notamment dans le cadre d'un véhicule automobile hybride ou électrique. Le circuit de climatisation peut ainsi être utilisé par exemple pour réchauffer le fluide caloporteur via un échangeur de chaleur bifluide dédié appelé condenseur d'eau ou alors pour refroidir le fluide caloporteur via un autre échangeur de chaleur bifluide également appelé refroidisseur.

Cependant, ce genre d'architectures ne sont pas toujours satisfaisantes car elles ne permettent pas de fonctionner selon l'ensemble des modes de fonctionnement demandés par les constructeurs.

Par exemple, le document FR 3 036 744 A1 dévoile un circuit de climatisation inversible dans lequel circule un fluide réfrigérant et comportant :
- une boucle principale comportant dans le sens de circulation du fluide réfrigérant, un compresseur, un condenseur d'eau relié conjointement à un circuit annexe dans lequel circule un fluide caloporteur, un premier dispositif de détente, un évapo-condenseur externe destiné à être traversé par un flux d'air externe, un deuxième dispositif de détente, et un évaporateur destiné à être traversé par un flux d'air interne,
- une première branche de dérivation comportant un condenseur interne destiné à être traversé par un flux d'air interne, ladite première branche de dérivation reliant un premier point de jonction disposé en aval du condenseur d'eau, entre ledit condenseur et le premier dispositif de détente, à un deuxième point de jonction,
- une deuxième branche de dérivation reliant un troisième point de jonction disposé en aval de l'évapo-condenseur externe, entre ledit évapo-condenseur externe et le deuxième point de jonction, à un quatrième point de jonction disposé en aval de l'évaporateur, entre ledit évaporateur et le compresseur, et
- une troisième branche de dérivation reliant un cinquième point de jonction disposé en aval du troisième point de jonction, entre ledit troisième point de jonction et le deuxième point de jonction, à un sixième point de jonction disposé en aval du premier point de jonction, entre ledit premier point de jonction et le premier dispositif de détente.

Un des buts de la présente invention est donc de remédier au moins partiellement aux inconvénients de l'art antérieur et de proposer une architecture permettant une multitude de modes de fonctionnement afin de répondre aux exigences des constructeurs et aux besoins des utilisateurs.

La présente invention concerne un circuit de climatisation inversible selon la revendication 1 dans lequel circule un fluide réfrigérant et comportant :
- une boucle principale comportant dans le sens de circulation du fluide réfrigérant, un compresseur, un condenseur d'eau relié conjointement à un circuit annexe dans lequel circule un fluide caloporteur, un premier dispositif de détente), un évapo-condenseur externe destiné à être traversé par un flux d'air externe, un deuxième dispositif de détente, et un évaporateur destiné à être traversé par un flux d'air interne,
- une première branche de dérivation comportant un condenseur interne destiné à être traversé par un flux d'air interne, ladite première branche de dérivation reliant un premier point de jonction disposé en aval du condenseur d'eau, entre ledit condenseur et le premier dispositif de détente, à un deuxième point de jonction disposé en amont du deuxième dispositif de détente, entre l'évapo-condenseur externe et ledit deuxième dispositif de détente,
- une deuxième branche de dérivation reliant un troisième point de jonction disposé en aval de l'évapo-condenseur externe, entre ledit évapo-condenseur externe et le deuxième point de jonction, à un quatrième point de jonction disposé en aval de l'évaporateur, entre ledit évaporateur et le compresseur, et
- une troisième branche de dérivation reliant un cinquième point de jonction disposé en aval du troisième point de jonction, entre ledit troisième point de jonction et le deuxième point de jonction, à un sixième point de jonction disposé en aval du premier point de jonction, entre ledit premier point de jonction et le premier dispositif de détente.

Selon l'invention, la boucle principale comporte un échangeur de chaleur interne configuré pour permettre les échanges de chaleur entre le fluide réfrigérant à des pressions distinctes, ledit échangeur de chaleur interne étant disposé d'une part entre le cinquième et le deuxième point de jonction et d'autre part entre le quatrième point de jonction et le compresseur.

Selon un aspect de l'invention, le circuit de climatisation inversible est configuré pour fonctionner selon un premier mode de refroidissement dans lequel le fluide réfrigérant circule successivement dans le compresseur, le condenseur d'eau, le premier dispositif de détente qu'il traverse sans perte de pression, l'évapo-condenseur externe au niveau duquel le fluide réfrigérant cède de l'énergie calorifique au flux d'air externe, le deuxième dispositif de détente au niveau duquel le fluide réfrigérant subit une perte de pression, l'évaporateur au niveau duquel le fluide réfrigérant absorbe de l'énergie calorifique du flux d'air interne avant de rejoindre le compresseur.

Selon un autre aspect de l'invention, le circuit de climatisation inversible est configuré pour fonctionner selon un premier mode pompe à chaleur dans lequel le fluide réfrigérant circule successivement dans le compresseur, le condenseur d'eau, la première branche de dérivation au niveau de laquelle le fluide réfrigérant cède de l'énergie calorifique au flux d'air interne via le condenseur interne, le fluide réfrigérant passe ensuite par la troisième branche de dérivation, le premier dispositif de détente au niveau duquel le fluide réfrigérant subit une perte de pression, l'évapo-condenseur externe au niveau duquel le fluide réfrigérant absorbe de l'énergie calorifique du flux d'air externe, le fluide réfrigérant passe ensuite par la deuxième branche de dérivation avant de rejoindre le compresseur.

Selon un autre aspect de l'invention, le circuit de climatisation inversible est configuré pour fonctionner selon un deuxième mode pompe à chaleur dans lequel le fluide réfrigérant circule successivement dans le compresseur, le condenseur d'eau au niveau duquel le fluide réfrigérant cède de l'énergie calorifique au fluide caloporteur du circuit annexe, le premier dispositif de détente au niveau duquel le fluide réfrigérant subit une perte de pression, l'évapo-condenseur externe au niveau duquel le fluide réfrigérant absorbe de l'énergie calorifique du flux d'air externe, le fluide réfrigérant passe ensuite par la deuxième branche de dérivation avant de rejoindre le compresseur.

Selon un autre aspect de l'invention, le circuit de climatisation inversible est configuré pour fonctionner selon un mode de déshumidification dans lequel le fluide réfrigérant circule successivement dans le compresseur, le condenseur d'eau, la première branche de dérivation au niveau de laquelle le fluide réfrigérant cède de l'énergie calorifique au flux d'air interne via le condenseur interne, le fluide réfrigérant se divise ensuite au niveau du deuxième point de jonction :
- une première partie du fluide réfrigérant passe par la troisième branche de dérivation, le premier dispositif de détente au niveau duquel le fluide réfrigérant subit une perte de pression, l'évapo-condenseur externe au niveau duquel il absorbe de l'énergie calorifique du flux d'air externe, la deuxième branche de dérivation, et
- une deuxième partie du fluide réfrigérant passe par le deuxième dispositif de détente au niveau duquel le fluide réfrigérant subit une perte de pression et par l'évaporateur au niveau duquel le fluide réfrigérant absorbe de l'énergie calorifique du flux d'air interne,
les deux parties du fluide réfrigérant se rejoignant au niveau du quatrième point de jonction avant de retourner vers le compresseur.

Selon un autre aspect de l'invention, le circuit de climatisation inversible comprend en outre une quatrième branche de dérivation comportant dans le sens de circulation du fluide réfrigérant un troisième dispositif de détente et un refroidisseur relié conjointement à un circuit d'un fluide caloporteur, ladite quatrième branche de dérivation reliant un septième point de jonction disposé en aval du deuxième point de jonction, entre ledit deuxième point de jonction et le deuxième dispositif de détente à un huitième point de jonction disposé en aval de l'évaporateur, entre ledit évaporateur et le quatrième point de jonction.

Selon un autre aspect de l'invention, le circuit de climatisation inversible est configuré pour fonctionner selon un deuxième mode de refroidissement dans lequel le fluide réfrigérant circule successivement dans le compresseur, le condenseur d'eau, le premier dispositif de détente qu'il traverse sans perte de pression, l'évapo-condenseur externe au niveau duquel le fluide réfrigérant cède de l'énergie calorifique au flux d'air externe, le fluide réfrigérant se divisant au niveau du septième point de jonction :
- une première partie du fluide réfrigérant passant par le deuxième dispositif de détente au niveau duquel le fluide réfrigérant subit une perte de pression et l'évaporateur au niveau duquel le fluide réfrigérant absorbe de l'énergie calorifique du flux d'air interne, et
- une deuxième partie du fluide réfrigérant passant par le troisième dispositif de détente au niveau duquel le fluide réfrigérant subit une perte de pression et le refroidisseur au niveau duquel le fluide réfrigérant absorbe de l'énergie calorifique du fluide caloporteur du circuit annexe,
les deux parties du fluide réfrigérant se rejoignant au niveau du huitième point de jonction avant de retourner vers le compresseur.

Selon un autre aspect de l'invention, le circuit de climatisation inversible est configuré pour fonctionner selon un mode de dégivrage dans lequel le fluide réfrigérant circule successivement dans le compresseur, condenseur d'eau au niveau duquel le fluide réfrigérant cède de l'énergie calorifique au fluide caloporteur du circuit annexe, le premier dispositif de détente au niveau duquel le fluide réfrigérant subit une première perte de pression, l'évapo-condenseur externe au niveau duquel le fluide réfrigérant cède de l'énergie calorifique afin de dégivrer, en sortie de l'évapo-condenseur externe, le fluide réfrigérant passe par le septième point de jonction avant d'aller selon les besoins vers le deuxième dispositif de détente et/ou vers la quatrième branche de dérivation :
- en passant par le deuxième dispositif de détente, le fluide réfrigérant subit une deuxième perte de pression et l'évaporateur au niveau duquel le fluide réfrigérant absorbe de l'énergie calorifique du flux d'air interne, et
- en passant par le troisième dispositif de détente, le fluide réfrigérant subit une deuxième perte de pression et le refroidisseur au niveau duquel le fluide réfrigérant absorbe de l'énergie calorifique du fluide caloporteur du circuit annexe,
le fluide réfrigérant rejoint ensuite le compresseur.

Selon un autre aspect de l'invention, le circuit de climatisation inversible est configuré pour fonctionner selon un mode de démarrage à froid dans lequel le fluide réfrigérant circule successivement dans le compresseur, le condenseur d'eau au niveau duquel le fluide réfrigérant cède de l'énergie calorifique au fluide caloporteur du circuit annexe, le premier dispositif de détente au niveau duquel le fluide réfrigérant subit une perte de pression, l'évapo-condenseur externe que le fluide réfrigérant traverse avec peu ou pas de perte d'énergie calorifique, le fluide réfrigérant passant ensuite dans le troisième dispositif de détente que le fluide réfrigérant traverse sans perte de pression et le refroidisseur au niveau duquel le fluide réfrigérant absorbe de l'énergie calorifique du fluide caloporteur du circuit annexe, le fluide réfrigérant rejoignant ensuite le compresseur.

D'autres caractéristiques et avantages de l'invention apparaîtront plus clairement à la lecture de la description suivante, donnée à titre d'exemple illustratif et non limitatif, et des dessins annexés parmi lesquels :
- La figure 1 montre une représentation schématique d'un circuit de climatisation inversible,
- La figure 2a montre une représentation schématique d'un circuit de climatisation inversible selon un premier mode de fonctionnement,
- La figure 2b montre une représentation schématique d'un diagramme pression / enthalpie du premier mode de fonctionnement de la figure 2a,
- La figure 3a montre une représentation schématique d'un circuit de climatisation inversible selon un deuxième mode de fonctionnement,
- La figure 3b montre une représentation schématique d'un diagramme pression / enthalpie du deuxième mode de fonctionnement de la figure 3a,
- La figure 4a montre une représentation schématique d'un circuit de climatisation inversible selon un troisième mode de fonctionnement,
- La figure 4b montre une représentation schématique d'un diagramme pression / enthalpie du troisième mode de fonctionnement de la figure 4a,
- La figure 5a montre une représentation schématique d'un circuit de climatisation inversible selon un quatrième mode de fonctionnement,
- La figure 5b montre une représentation schématique d'un diagramme pression / enthalpie du quatrième mode de fonctionnement de la figure 5a,
- La figure 6a montre une représentation schématique d'un circuit de climatisation inversible selon un cinquième mode de fonctionnement,
- La figure 6b montre une représentation schématique d'un diagramme pression / enthalpie du cinquième mode de fonctionnement de la figure 6a,
- La figure 7a montre une représentation schématique d'un circuit de climatisation inversible selon un sixième mode de fonctionnement,
- La figure 7b montre une représentation schématique d'un diagramme pression / enthalpie du sixième mode de fonctionnement de la figure 7a,
- La figure 8a montre une représentation schématique d'un circuit de climatisation inversible selon un septième mode de fonctionnement,
- La figure 8b montre une représentation schématique d'un diagramme pression / enthalpie du septième mode de fonctionnement de la figure 8a.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

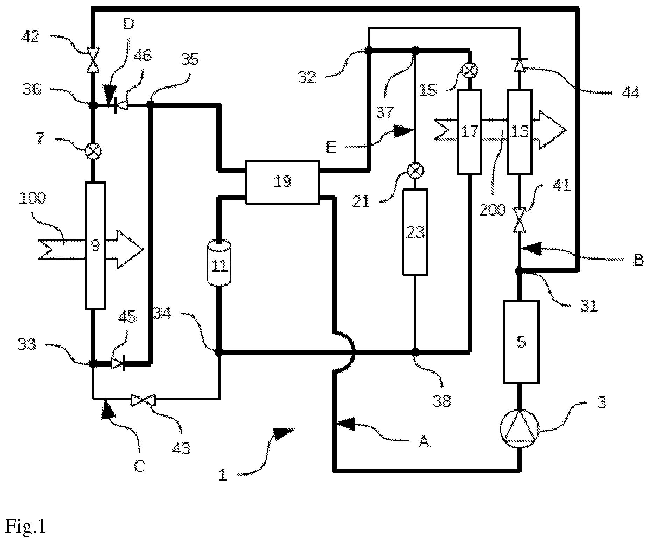

La figure 1 montre un circuit de climatisation inversible 1 dans lequel circule un fluide réfrigérant et comportant une boucle principale A ainsi que trois branches de dérivation B, C et D.

La boucle principale A comporte dans le sens de circulation du fluide réfrigérant :
- un compresseur 3,
- un condenseur d'eau 5 relié conjointement à un circuit annexe dans lequel circule un fluide caloporteur,
- un premier dispositif de détente 7,
- un évapo-condenseur externe 9 destiné à être traversé par un flux d'air externe 100,
- un deuxième dispositif de détente 15, et
- un évaporateur 17 destiné à être traversé par un flux d'air interne 200.

Cette boucle principale A est une boucle arbitrairement choisie afin de faciliter sa description. Cette boucle principale A correspond au chemin du fluide réfrigérant dans un mode référence de refroidissement décrit plus loin dans la présente description.

Le premier 7 et le deuxième 15 dispositif de détente peuvent plus particulièrement être des dispositifs de détentes pouvant permettre le passage du fluide réfrigérant sans perte de pression. Le deuxième dispositif de détente 15 peut également avoir une fonction d'arrêt et permettre le blocage de la circulation du fluide réfrigérant.

Par flux d'air externe 100, on entend plus particulièrement un flux d'air en provenance de l'extérieur du véhicule. L'évapo-condenseur externe 9 peut ainsi, par exemple, être disposé en face avant du véhicule automobile au niveau de la calandre.

Par flux d'air interne 200, on entend plus particulièrement un flux d'air à destination de l'habitacle d'un véhicule automobile. L'évaporateur 17 peut par exemple être disposé au sein d'un dispositif de chauffage, ventilation et climatisation (HVAC en anglais).

Par circuit annexe, on entend un circuit de circulation dans lequel un fluide caloporteur, par exemple de l'eau ou de l'eau glycolée circule. Ce circuit peut comporter différents échangeurs de chaleur afin de permettre la gestion thermique par exemple de batteries et/ou de moteurs électrique, notamment dans le cadre d'un véhicule automobile hybride ou électrique.

La première branche de dérivation B relie un premier point de jonction 31 à un deuxième point de jonction 32. Le premier point de jonction 31 est disposé en aval du condenseur d'eau 5, entre le condenseur 5 et le premier dispositif de détente 7. Le deuxième point de jonction 32 est, quant à lui, disposé en amont du deuxième dispositif de détente 15, entre l'évapo-condenseur externe 9 et le deuxième dispositif de détente 15.

La première branche de dérivation B comporte notamment un condenseur interne 13 destiné à être traversé par le flux d'air interne 200. Ce condenseur interne 13 peut notamment être placé en aval de l'évaporateur 17 dans le flux d'air interne 200.

La deuxième branche de dérivation C relie un troisième point de jonction 33 à un quatrième point de jonction 34. Le troisième point de jonction 33 est disposé en aval de l'évapo-condenseur externe 9, entre ledit évapo-condenseur externe 9 et le deuxième point de jonction 32. Le quatrième point de jonction 34 est quand à lui disposé en aval de l'évaporateur 17, entre ledit évaporateur 17 et le compresseur 3.

La troisième branche de dérivation D relie un cinquième point de jonction 35 à un sixième point de jonction 36. Le cinquième point de jonction 35 est disposé en aval du troisième point de jonction 33, entre ledit troisième point de jonction 33 et le deuxième point de jonction 32. Le sixième point de jonction 36 est, quant à lui, disposé en aval du premier point de jonction 31, entre ledit premier point de jonction 31 et le premier dispositif de détente 7.

Afin de contrôler et déterminer le chemin du fluide réfrigérant, le circuit de climatisation inversible 1 comporte différents moyens de contrôle du flux de fluide réfrigérant.

Afin de déterminer si le fluide réfrigérant circule ou non dans la première branche de dérivation B, le circuit de climatisation inversible 1 peut ainsi comporter une première vanne d'arrêt 41 disposée sur ladite première branche de dérivation B et une deuxième vanne d'arrêt 42 disposée sur la boucle principale A, en aval du premier point de jonction 31, entre ledit premier point de jonction 31 et le sixième point de jonction 36.

La première branche de dérivation B peut également comporter une vanne anti-retour 44 disposée entre la première vanne d'arrêt 31 et le deuxième point de jonction 34 afin d'éviter une remontée du fluide réfrigérant depuis le deuxième point de jonction 32 vers le premier point de jonction 31.

La deuxième branche de dérivation C peut également comporter une troisième vanne d'arrêt 43 afin de permettre ou non au fluide réfrigérant issu de l'évapo-condenseur externe 9 de la traverser.

La boucle principale A peut également comporter une vanne anti-retour 45 disposée en aval de l'évapo-condenseur externe 9 entre le troisième point de jonction 33 et le cinquième point de jonction 35 afin d'éviter une remontée du fluide réfrigérant depuis le cinquième point de jonction 35 vers le troisième point de jonction 33.

La troisième branche de dérivation D peut également comporter une vanne anti-retour 46 afin d'éviter une remontée du fluide réfrigérant depuis le sixième point de jonction 36 vers le cinquième point de jonction 35.

Le circuit de climatisation inversible 1 comporte également sur la boucle principale A un échangeur de chaleur interne 19. Cet échangeur de chaleur interne 19 est configuré pour permettre les échanges de chaleur entre le fluide réfrigérant à des pressions distinctes dans différents modes de fonctionnement décrit plus loin dans la présente description. Cet échangeur de chaleur interne 19 est plus particulièrement disposé d'une part entre le cinquième 35 et le deuxième 32 point de jonction et d'autre part entre le quatrième point de jonction 34 et le compresseur 3.

Le circuit de climatisation inversible 1 peut également comporter un accumulateur 11 de fluide réfrigérant par exemple disposé en amont du compresseur 3. Plus précisément, cet accumulateur 11 peut être disposé en aval du quatrième point de jonction 34 entre ledit quatrième point de jonction 34 et l'échangeur de chaleur interne 19.

Le circuit de climatisation inversible 1 peut en outre comprendre une quatrième branche de dérivation E. Cette quatrième branche de dérivation E est connectée parallèlement au deuxième dispositif de détente 15 et de l'évaporateur 17 et relie un septième point de jonction 37 à un huitième point de jonction 38. Le septième point de jonction 37 est disposé en aval du deuxième point de jonction 32, entre ledit deuxième point de jonction 32 et le deuxième dispositif de détente 15. Le huitième point de jonction 38 est, quant à lui, disposé en aval de l'évaporateur 17, entre ledit évaporateur 17 et le quatrième point de jonction 34.

La quatrième branche de dérivation E comporte dans le sens de circulation du fluide réfrigérant un troisième dispositif de détente 21 et un refroidisseur 23 relié conjointement à un circuit d'un fluide caloporteur. Le troisième dispositif de détente 21 peut plus particulièrement être un dispositif de détente pouvant permettre le passage du fluide réfrigérant sans perte de pression. Le troisième dispositif de détente 21 peut également avoir une fonction d'arrêt et permettre le blocage de la circulation du fluide réfrigérant.

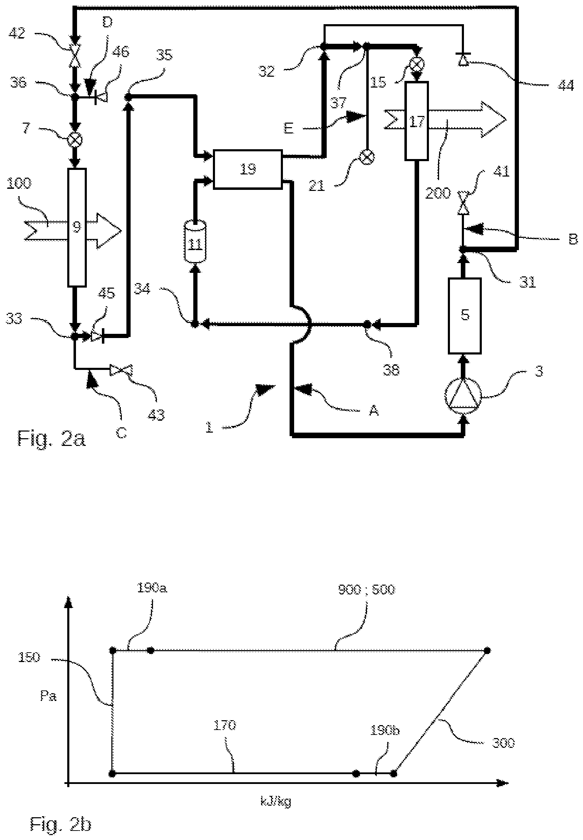

Le circuit de climatisation inversible 1 peut notamment fonctionner selon différents modes de fonctionnements illustrés aux figures 2a, 3a, 4a, 5a, 6a, 7a et 8a. Sur ces figures, seuls les éléments dans lesquels le fluide caloporteur circule sont représentés. De plus des flèches indiquent le sens de circulation du fluide caloporteur.

### a) Premier mode de refroidissement :

Le circuit de climatisation inversible 1 peut être configuré pour fonctionner selon un premier mode de refroidissement illustré à la figure 2a. La figure 2b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Dans ce premier mode de refroidissement, le fluide réfrigérant passe tout d'abord dans le compresseur 3. Au niveau du compresseur 3 le fluide réfrigérant subit une augmentation de sa pression et de son enthalpie, comme illustré par la courbe 300 sur le diagramme de la figure 2b.

Le fluide réfrigérant passe ensuite dans le condenseur d'eau 5. Si ce condenseur d'eau 5 est en fonctionnement, c'est-à-dire qu'il est traversé également par le fluide caloporteur du circuit annexe, le fluide réfrigérant peut céder de l'énergie calorifique au fluide caloporteur, comme illustré par la courbe 500 sur le diagramme de la figure 2b. Cela peut permettre par exemple de réchauffer les batteries et/ou le moteur électrique en liaison avec le circuit annexe afin qu'ils atteignent une température optimale de fonctionnement. Si le condenseur d'eau 5 est à l'arrêt, c'est-à-dire qu'il n'est pas traversé par le fluide caloporteur du circuit annexe, le fluide réfrigérant le traverse sans perte d'énergie calorifique au fluide caloporteur.

Le fluide réfrigérant passe ensuite dans le premier dispositif de détente 7 qu'il traverse sans perte de pression.

Le fluide réfrigérant passe ensuite dans l'évapo-condenseur externe 9. Au niveau de l'évapo-condenseur externe 9, le fluide réfrigérant cède de l'énergie calorifique au flux d'air externe 100, comme illustré par la courbe 900 sur le diagramme de la figure 2b.

Le fluide réfrigérant passe ensuite dans le deuxième dispositif de détente 15 au niveau duquel le fluide réfrigérant subit une perte de pression, comme illustré par la courbe 150 sur le diagramme de la figure 2b.

Le fluide réfrigérant passe ensuite dans l'évaporateur 17. Au niveau de l'évaporateur 17, le fluide réfrigérant absorbe de l'énergie calorifique du flux d'air interne 200, comme illustré par la courbe 170 sur le diagramme de la figure 2b.

Le fluide réfrigérant rejoint ensuite le compresseur 3 en passant notamment par l'accumulateur 11.

Dans ce premier mode de refroidissement, la présence de l'échangeur de chaleur interne 19 peut permettre d'augmenter le coefficient de performance du circuit de climatisation inversible 1. En effet, comme le montrent la figure 2a et les courbes 190a et 190b du diagramme de la figure 2b, le fluide réfrigérant en sortie de l'évapo-condenseur externe 9 transfère une partie de son enthalpie et donc de son énergie calorifique au fluide réfrigérant en amont du compresseur 3.

Afin de permettre ce premier mode de refroidissement, les première 41 et troisième 43 vannes d'arrêt sont fermées. La deuxième vanne d'arrêt 42 est, quant à elle, ouverte.

Si le circuit de climatisation inversible 1 comporte une quatrième branche de dérivation E, le troisième dispositif de détente 21 est alors fermé afin d'empêcher la circulation du fluide réfrigérant en son sein.

Ce premier mode de refroidissement permet de refroidir le flux d'air interne 200 en absorbant de l'énergie calorifique au niveau de l'évaporateur 17. Cette énergie calorifique est cédée au flux d'air externe 100 au niveau de l'évapo-condenseur externe 9.

### b) Deuxième monde de refroidissement :

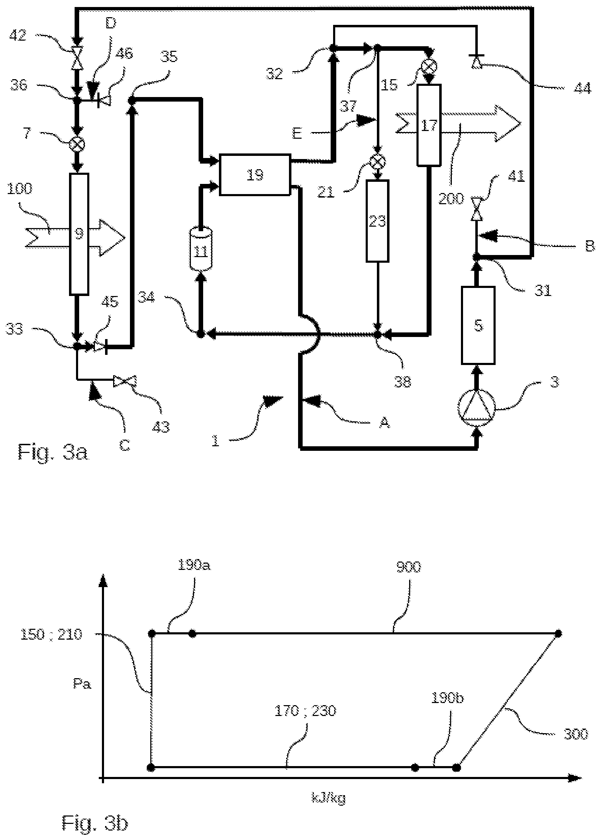

Le circuit de climatisation inversible 1 peut être configuré pour fonctionner selon un deuxième mode de refroidissement illustré à la figure 3a. La figure 3b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Ce deuxième mode de refroidissement est identique au premier mode de refroidissement à la différence que le circuit de climatisation inversible 1 comporte une quatrième branche de dérivation E à l'intérieur de laquelle le fluide réfrigérant circule parallèlement à l'évaporateur 17.

Ainsi, en sortie de l'évapo-condenseur externe 9, le fluide réfrigérant se divise au niveau du septième point de jonction 37.

Une première partie du fluide réfrigérant passe par le deuxième dispositif de détente 15 au niveau duquel le fluide réfrigérant subit une perte de pression, comme illustré sur la courbe 150 du diagramme de la figure 3b. Cette première partie du fluide réfrigérant passe ensuite par l'évaporateur 17 au niveau duquel le fluide réfrigérant absorbe de l'énergie calorifique du flux d'air interne 200, comme illustré par la courbe 170 du diagramme de la figure 3b.

Une deuxième partie du fluide réfrigérant passe par le troisième dispositif de détente 21 au niveau duquel le fluide réfrigérant subit une perte de pression, comme illustré sur la courbe 210 du diagramme de la figure 3b. Cette deuxième partie du fluide réfrigérant passe ensuite par le refroidisseur 23 au niveau duquel le fluide réfrigérant absorbe de l'énergie calorifique du fluide caloporteur du circuit annexe, comme illustré par la courbe 230 du diagramme de la figure 3b.

Les deux parties du fluide réfrigérant se rejoignent ensuite au niveau du huitième point de jonction 38 avant de retourner vers le compresseur 3.

Afin de permettre ce deuxième mode de refroidissement, les première 41 et troisième 43 vannes d'arrêt sont fermées. La deuxième vanne d'arrêt 42 est, quant à elle, ouverte.

Ce deuxième mode de refroidissement permet de refroidir le flux d'air interne 200 au niveau de l'évaporateur 17 mais également le fluide caloporteur au niveau du refroidisseur 23. Le fait de refroidir le fluide caloporteur du circuit annexe permet par exemple de refroidir les batteries et/ou le moteur électrique d'un véhicule hybride ou électrique.

### c) Premier mode pompe à chaleur :

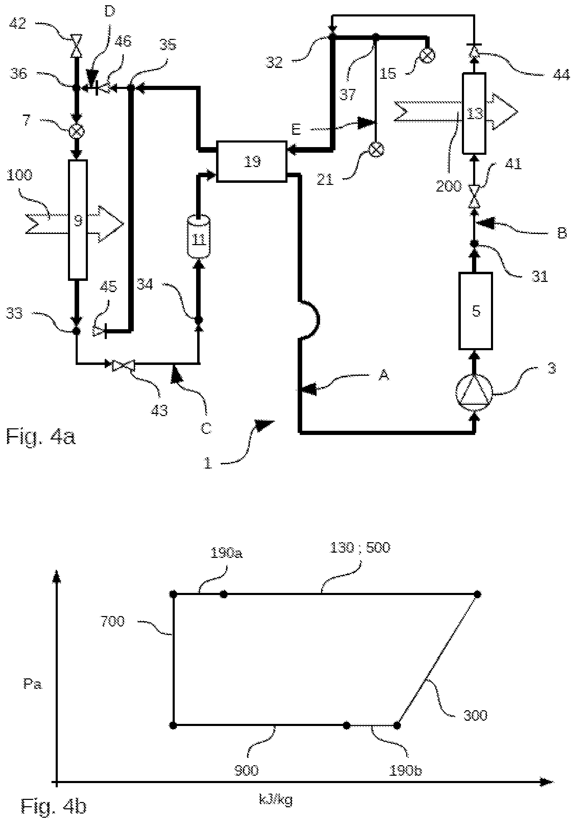

Le circuit de climatisation inversible 1 peut être configuré pour fonctionner selon un premier mode pompe à chaleur illustré à la figure 4a. La figure 4b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Dans ce premier mode pompe à chaleur, le fluide réfrigérant passe tout d'abord dans le compresseur 3. Au niveau du compresseur 3 le fluide réfrigérant subit une augmentation de sa pression et de son enthalpie, comme illustré par la courbe 300 sur le diagramme de la figure 4b.

Le fluide réfrigérant passe ensuite dans le condenseur d'eau 5. Si ce condenseur d'eau 5 est en fonctionnement, c'est-à-dire qu'il est traversé également par le fluide caloporteur du circuit annexe, le fluide réfrigérant peut céder de l'énergie calorifique au fluide caloporteur, comme illustré par la courbe 500 sur le diagramme de la figure 4b. Cela peut permettre par exemple de réchauffer les batteries et/ou le moteur électrique en liaison avec le circuit annexe afin qu'ils atteignent une température optimale de fonctionnement. Si le condenseur d'eau 5 est à l'arrêt, c'est-à-dire qu'il n'est pas traversé par le fluide caloporteur du circuit annexe, le fluide réfrigérant le traverse sans perte d'énergie calorifique au fluide caloporteur.

Le fluide caloporteur passe ensuite dans la première branche de dérivation B au niveau de laquelle le fluide réfrigérant cède de l'énergie calorifique au flux d'air interne 200 via le condenseur interne 13, comme illustré par la courbe 130 du diagramme de la figure 4b.

Le fluide réfrigérant passe ensuite par la troisième branche de dérivation D, afin de rejoindre le premier dispositif de détente 7. Au niveau du premier dispositif de détente 7, le fluide réfrigérant subit une perte de pression, comme illustré par la courbe 700 du diagramme de la figure 4b.

Le fluide réfrigérant passe ensuite dans l'évapo-condenseur externe 9. Au niveau de l'évapo-condenseur externe 9, le fluide réfrigérant absorbe de l'énergie calorifique du flux d'air externe 100, comme illustré par la courbe 900 du diagramme de la figure 4b.

Le fluide réfrigérant passe ensuite par la deuxième branche de dérivation C avant de rejoindre le compresseur 3 en passant notamment par l'accumulateur 11.

Dans ce premier mode pompe à chaleur, la présence de l'échangeur de chaleur interne 19 peut permettre d'augmenter le coefficient de performance du circuit de climatisation inversible 1. En effet, comme le montrent la figure 4a et les courbes 190a et 190b du diagramme de la figure 4b, le fluide réfrigérant en sortie du condenseur interne 13 transfère une partie de son enthalpie et donc de son énergie calorifique au fluide réfrigérant en aval de l'évapo-condenseur externe 9.

Afin de permettre ce premier mode pompe à chaleur, les première 41 et troisième 43 vannes d'arrêt sont ouvertes. La deuxième vanne d'arrêt 42 est, quant à elle, fermée.

Le deuxième dispositif de détente 15 est fermé afin d'empêcher la circulation du fluide réfrigérant dans l'évaporateur 13.

Si le circuit de climatisation inversible 1 comporte une quatrième branche de dérivation E, le troisième dispositif de détente 21 est également fermé afin d'empêcher la circulation du fluide réfrigérant en son sein.

Ce premier mode pompe à chaleur permet de réchauffer le flux d'air interne 200 au niveau du condenseur interne 13, ainsi qu'éventuellement le fluide caloporteur au niveau du condenseur d'eau 5, en puisant de l'énergie calorifique dans le flux d'air externe 100 au niveau de l'évapo-condenseur 9.

### d) Deuxième mode pompe à chaleur :

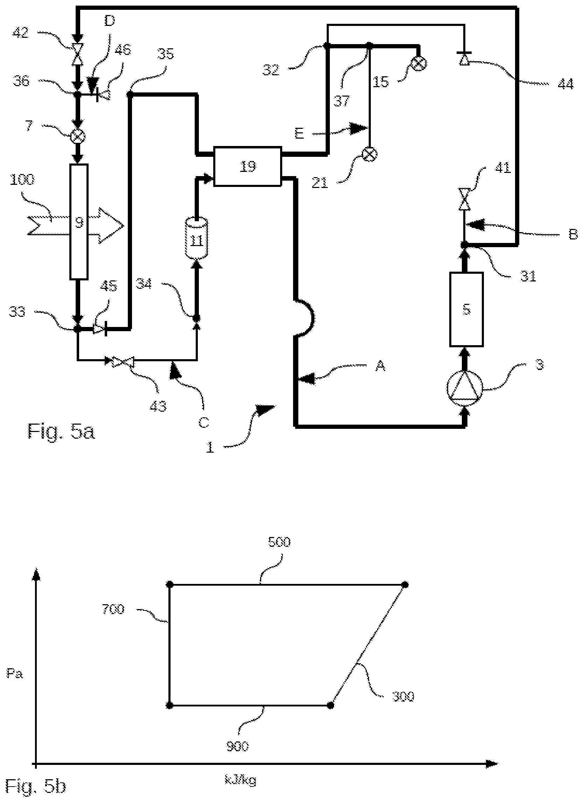

Le circuit de climatisation inversible 1 peut être configuré pour fonctionner selon un deuxième mode pompe à chaleur illustré à la figure 5a. La figure 5b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Dans ce deuxième mode pompe à chaleur, le fluide réfrigérant passe tout d'abord dans le compresseur 3. Au niveau du compresseur 3 le fluide réfrigérant subit une augmentation de sa pression et de son enthalpie, comme illustré par la courbe 300 sur le diagramme de la figure 5b.

Le fluide réfrigérant passe ensuite dans le condenseur d'eau 5 qui est en fonctionnement,c'est-à-dire qu'il est traversé également par le fluide caloporteur du circuit annexe. Le fluide réfrigérant cède alors de l'énergie calorifique au fluide caloporteur, comme illustré par la courbe 500 sur le diagramme de la figure 5b.

Le fluide réfrigérant passe ensuite par le premier dispositif de détente 7. Au niveau du premier dispositif de détente 7, le fluide réfrigérant subit une perte de pression, comme illustré par la courbe 700 du diagramme de la figure 5b.

Le fluide réfrigérant passe ensuite dans l'évapo-condenseur externe 9. Au niveau de l'évapo-condenseur externe 9, le fluide réfrigérant absorbe de l'énergie calorifique du flux d'air externe 100, comme illustré par la courbe 900 du diagramme de la figure 5b.

Le fluide réfrigérant passe ensuite par la deuxième branche de dérivation C avant de rejoindre le compresseur 3 en passant notamment par l'accumulateur 11.

Dans ce deuxième mode pompe à chaleur, la présence de l'échangeur de chaleur interne 19 n'influe pas car il n'est traversé uniquement par le fluide réfrigérant en provenance de l'évapo-condenseur externe 9.

Afin de permettre ce deuxième mode pompe à chaleur, les deuxième 42 et troisième 43 vannes d'arrêt sont ouvertes. La première vanne d'arrêt 41 est, quant à elle, fermée.

Le deuxième dispositif de détente 15 est fermé afin d'empêcher la circulation du fluide réfrigérant dans l'évaporateur 13.

Si le circuit de climatisation inversible 1 comporte une quatrième branche de dérivation E, le troisième dispositif de détente 21 est également fermé afin d'empêcher la circulation du fluide réfrigérant en son sein.

Ce deuxième mode pompe à chaleur permet de réchauffer uniquement le fluide caloporteur au niveau du condenseur d'eau 5 en puisant de l'énergie calorifique dans le flux d'air externe 100 au niveau de l'évapo-condenseur 9.

### c) Mode de déshumidification :

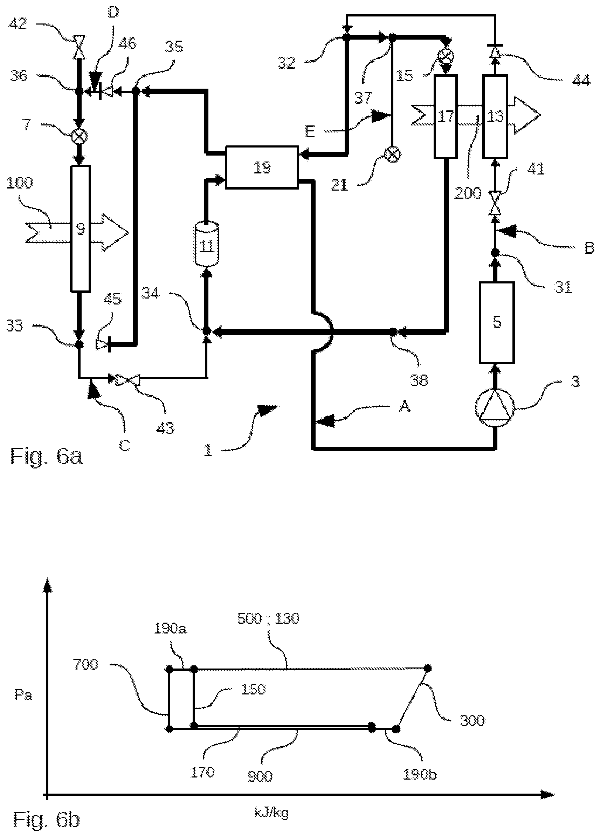

Le circuit de climatisation inversible 1 peut être configuré pour fonctionner selon un mode de déshumidification illustré à la figure 6a. La figure 6b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Dans ce mode de déshumidification, le fluide réfrigérant passe tout d'abord dans le compresseur 3. Au niveau du compresseur 3 le fluide réfrigérant subit une augmentation de sa pression et de son enthalpie, comme illustré par la courbe 300 sur le diagramme de la figure 6b.

Le fluide réfrigérant passe ensuite dans le condenseur d'eau 5. Si ce condenseur d'eau 5 est en fonctionnement, c'est-à-dire qu'il est traversé également par le fluide caloporteur du circuit annexe, le fluide réfrigérant peut céder de l'énergie calorifique au fluide caloporteur, comme illustré par la courbe 500 sur le diagramme de la figure 6b. Cela peut permettre par exemple de réchauffer les batteries et/ou le moteur électrique en liaison avec le circuit annexe afin qu'ils atteignent une température optimale de fonctionnement. Si le condenseur d'eau 5 est à l'arrêt, c'est-à-dire qu'il n'est pas traversé par le fluide caloporteur du circuit annexe, le fluide réfrigérant le traverse sans perte d'énergie calorifique au fluide caloporteur.

Le fluide caloporteur passe ensuite dans la première branche de dérivation B au niveau de laquelle le fluide réfrigérant cède de l'énergie calorifique au flux d'air interne 200 via le condenseur interne 13, comme illustré par la courbe 130 du diagramme de la figure 6b.

Le fluide réfrigérant se divise ensuite au niveau du deuxième point de jonction 32.

Une première partie du fluide réfrigérant passe par la troisième branche de dérivation D afin de rejoindre le premier dispositif de détente 7. Au niveau premier dispositif de détente 7, le fluide réfrigérant subit une perte de pression, comme illustré par la courbe 700 du diagramme de la figure 6d.

Le fluide réfrigérant passe ensuite dans l'évapo-condenseur externe 9 au niveau duquel il absorbe de l'énergie calorifique du flux d'air externe 100, comme illustré par la courbe 900 du diagramme de la figure 6b.

Le fluide réfrigérant passe ensuite dans la deuxième branche de dérivation C.

Une deuxième partie du fluide réfrigérant passe par le deuxième dispositif de détente 15 au niveau duquel le fluide réfrigérant subit une perte de pression, comme illustré par la courbe 150 du diagramme de la figure 6b.

Le fluide réfrigérant passe ensuite par l'évaporateur 17 au niveau duquel le fluide réfrigérant absorbe de l'énergie calorifique du flux d'air interne 200, comme illustré par la courbe 170 du diagramme de la figure 6b.

Les deux parties du fluide réfrigérant se rejoignent au niveau du quatrième point de jonction 34 avant de retourner vers le compresseur 3 en passant notamment par l'accumulateur 11.

Dans ce mode de déshumidification, la présence de l'échangeur de chaleur interne 19 peut permettre d'augmenter le coefficient de performance du circuit de climatisation inversible 1. En effet, comme le montrent la figure 6a et les courbes 190a et 190b du diagramme de la figure 6b, la première partie du fluide réfrigérant en sortie du deuxième point de jonction 32 transfère une partie de son enthalpie et donc de son énergie calorifique au fluide réfrigérant en aval du quatrième point de jonction 34.

Afin de permettre ce mode de déshumidification, les première 41 et troisième 43 vannes d'arrêt sont ouvertes. La deuxième vanne d'arrêt 42 est, quant à elle, fermée.

Si le circuit de climatisation inversible 1 comporte une quatrième branche de dérivation E, le troisième dispositif de détente 21 est également fermé afin d'empêcher la circulation du fluide réfrigérant en son sein.

Ce mode de déshumidification permet notamment de déshumidifier le flux d'air interne 200 en le refroidissant au niveau de l'évaporateur 17 puis en le réchauffant au niveau du condenseur interne 13. Ce mode de déshumidification est particulièrement utile et efficace pour une température d'air extérieur supérieure à 0°C.

### f) Mode de dégivrage :

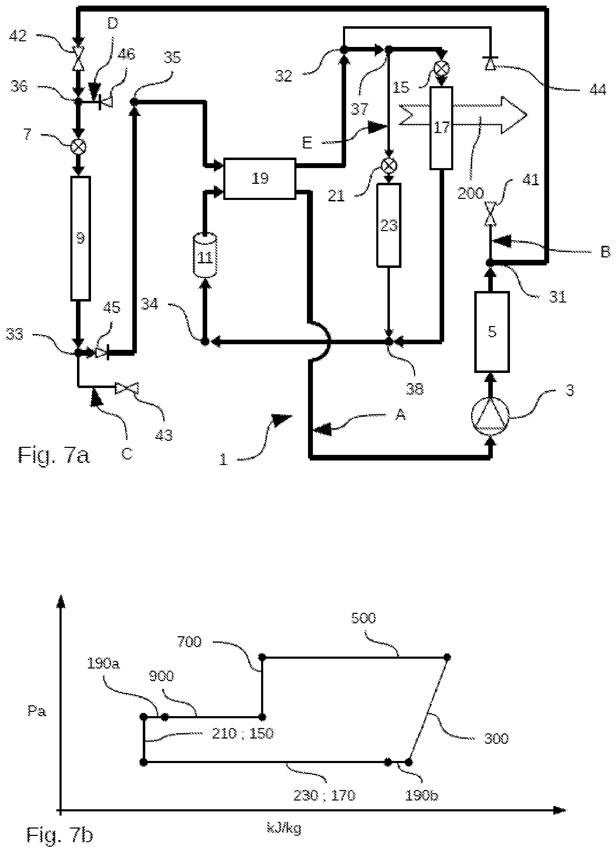

Le circuit de climatisation inversible 1 peut être configuré pour fonctionner selon un mode de dégivrage illustré à la figure 7a. La figure 7b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Dans ce mode de déshumidification, le fluide réfrigérant passe tout d'abord dans le compresseur 3. Au niveau du compresseur 3 le fluide réfrigérant subit une augmentation de sa pression et de son enthalpie, comme illustré par la courbe 300 sur le diagramme de la figure 7b.

Le fluide réfrigérant passe ensuite dans le condenseur d'eau 5 qui est en fonctionnement, c'est-à-dire qu'il est traversé également par le fluide caloporteur du circuit annexe. Le fluide réfrigérant cède alors de l'énergie calorifique au fluide caloporteur, comme illustré par la courbe 500 sur le diagramme de la figure 7b.

Le fluide réfrigérant passe ensuite par le premier dispositif de détente 7. Au niveau du premier dispositif de détente 7, le fluide réfrigérant subit une première perte de pression, comme illustré par la courbe 700 du diagramme de la figure 7b.

Le fluide réfrigérant passe ensuite dans l'évapo-condenseur externe 9. Au niveau de l'évapo-condenseur externe 9, le fluide réfrigérant cède de l'énergie calorifique du flux d'air externe 100, comme illustré par la courbe 900 du diagramme de la figure 7b. Au niveau de l'évapo-condenseur externe 9, le flux d'air externe 100 est plus particulièrement arrêté, c'est à dire qu'il ne traverse pas ledit évapo-condenseur externe 9, par exemple au moyen d'un dispositif de d'obturation de face avant. Ainsi l'énergie calorifique cédée au niveau de l'évapo-condenseur externe 9 est utilisée pour faire fondre le givre présent sur cet échangeur de chaleur.

En sortie de l'évapo-condenseur externe 9, le fluide réfrigérant passe par le septième point de jonction 37 avant d'aller selon les besoins vers le deuxième dispositif de détente 15 et/ou vers la quatrième branche de dérivation E.

En passant par le deuxième dispositif de détente 15, le fluide réfrigérant subit une deuxième perte de pression, comme illustré sur la courbe 150 du diagramme de la figure 7b. Le fluide réfrigérant passe ensuite par l'évaporateur 17 au niveau duquel il absorbe de l'énergie calorifique du flux d'air interne 200, comme illustré par la courbe 170 du diagramme de la figure 7b.

En passant par le troisième dispositif de détente 21 le fluide réfrigérant subit également une deuxième perte de pression, comme illustré sur la courbe 210 du diagramme de la figure 7b. Le fluide réfrigérant passe ensuite par le refroidisseur 23 au niveau duquel le fluide réfrigérant absorbe de l'énergie calorifique du fluide caloporteur du circuit annexe, comme illustré par la courbe 230 du diagramme de la figure 7b.

Le fluide réfrigérant rejoint ensuite le compresseur 3 en passant notamment par l'accumulateur 11.

Dans ce mode de dégivrage, la présence de l'échangeur de chaleur interne 19 peut permettre d'augmenter le coefficient de performance du circuit de climatisation inversible 1. En effet, comme le montrent la figure 7a et les courbes 190a et 190b du diagramme de la figure 7b, le fluide réfrigérant en sortie de l'évapo-condenseur externe 9 transfère une partie de son enthalpie et donc de son énergie calorifique au fluide réfrigérant en amont du compresseur 3.

Afin de permettre ce mode de dégivrage, les première 41 et troisième 43 vannes d'arrêt sont fermées. La deuxième vanne d'arrêt 42 est, quant à elle, ouverte.

Afin que le fluide réfrigérant passe uniquement par l'évaporateur 17, le troisième dispositif de détente 21 est fermé.

Afin que le fluide réfrigérant passe uniquement par la quatrième branche de dérivation E, le deuxième dispositif de détente 15 est fermé.

Ce premier mode de dégivrage permet de dégivrer le givre formé au niveau de l'évapo-condenseur externe 9, par exemple lors d'un fonctionnement en mode pompe à chaleur, en absorbant de l'énergie calorifique dans le flux d'air interne 100 au niveau de l'évaporateur 17 et/ou en absorbant de l'énergie calorifique du fluide caloporteur du circuit annexe au niveau du refroidisseur 23.

### g) Mode de démarrage à froid :

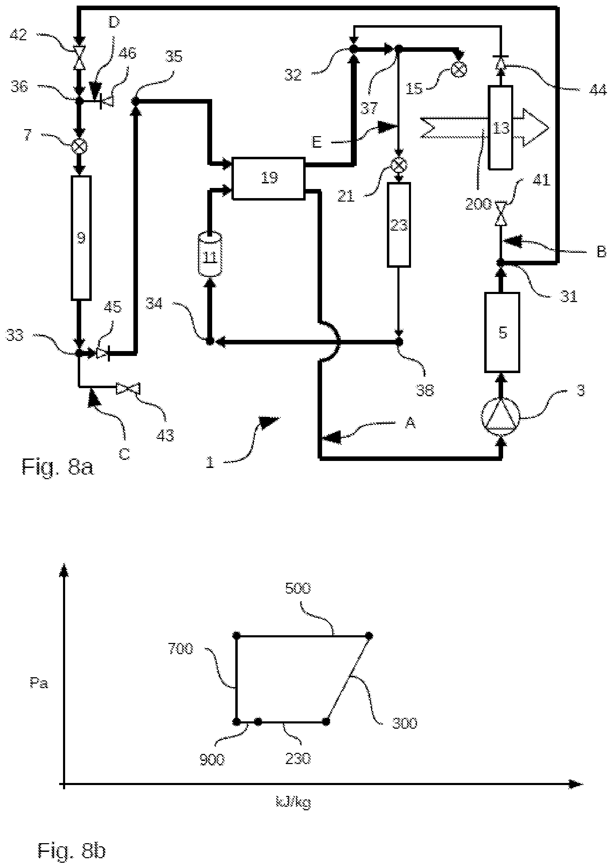

Le circuit de climatisation inversible 1 peut être configuré pour fonctionner selon un mode de démarrage à froid illustré à la figure 8a. La figure 8b montre, quant à elle, un diagramme pression (exprimée en Pascal Pa) / enthalpie (exprimée en kJ/kg) de l'évolution de la pression et de l'enthalpie du fluide réfrigérant lors de sa circulation et lorsqu'il traverse différents éléments.

Dans ce mode de démarrage à froid, le fluide réfrigérant passe tout d'abord dans le compresseur 3. Au niveau du compresseur 3 le fluide réfrigérant subit une augmentation de sa pression et de son enthalpie, comme illustré par la courbe 300 sur le diagramme de la figure 8b.

Le fluide réfrigérant passe ensuite dans le condenseur d'eau 5 qui est en fonctionnement, c'est-à-dire qu'il est traversé également par le fluide caloporteur du circuit annexe. Le fluide réfrigérant cède alors de l'énergie calorifique au fluide caloporteur, comme illustré par la courbe 500 sur le diagramme de la figure 8b.

Le fluide réfrigérant passe ensuite par le premier dispositif de détente 7. Au niveau du premier dispositif de détente 7, le fluide réfrigérant subit une perte de pression, comme illustré par la courbe 700 du diagramme de la figure 8b.

Le fluide réfrigérant passe ensuite dans l'évapo-condenseur externe 9. Au niveau de l'évapo-condenseur externe 9, le fluide réfrigérant perd peu ou pas d'énergie calorifique du flux d'air externe 100, comme illustré par la courbe 900 du diagramme de la figure 8b. En effet, le flux d'air externe 100 est arrêté, c'est à dire qu'il ne traverse pas l'évapo-condenseur externe 9, par exemple au moyen d'un dispositif de d'obturation de face avant.

Le fluide réfrigérant passe ensuite dans la quatrième branche de dérivation E et passe par le troisième dispositif de détente 21 qu'il traverse sans perte de pression.

Le fluide réfrigérant traverse ensuite le refroidisseur 23. Au niveau de ce refroidisseur 23, le fluide réfrigérant absorbe de l'énergie calorifique du fluide caloporteur du circuit annexe, comme illustré par la courbe 230 du diagramme de la figure 8b.

Le fluide réfrigérant rejoint ensuite le compresseur 3.

Dans ce mode de démarrage à froid, la présence de l'échangeur de chaleur interne 19 n'a aucun effet car le fluide réfrigérant traversant ledit échangeur de chaleur interne 19 en sortie de l'évapo-condenseur externe 9 et le fluide réfrigérant arrivant au compresseur 3 ont une pression relativement identique empêchant les échanges d'enthalpie de l'un à l'autre.

Afin de permettre ce mode de démarrage à froid, les première 41 et troisième 43 vannes d'arrêt sont fermées. La deuxième vanne d'arrêt 42 est, quant à elle, ouverte.

Afin que le fluide réfrigérant passe par la quatrième branche de dérivation E, le deuxième dispositif de détente 15 est fermé.

Ce mode de démarrage à froid permet lors d'un démarrage à froid du véhicule automobile, c'est à dire dans lequel tout les éléments et fluides du véhicule automobile sont à une température proche ou égale à la température ambiante, d'augmenter rapidement la pression du fluide réfrigérant dans le but de passer ultérieurement dans un mode de refroidissement.

Ce mode de démarrage à froid permet également de limiter la pression au sein du condenseur interne 13 par un phénomène d'aspiration du fluide réfrigérant illustré par des flèches sur la figure 8a. Cela permet ainsi que limiter la pression au sein de ce condenseur interne 13 lors du mode de refroidissement suivant ce mode de démarrage à froid.

En effet, pour un fluide réfrigérant de type chimique ou organique tel que le R134a, dans un mode de refroidissement, la haute pression est de l'ordre de 5 à 26 bar. Par haute pression on entend ici la pression du fluide réfrigérant en aval du compresseur 3, entre ledit compresseur 3 et le deuxième 15 et/ou troisième 21 dispositif de détente au niveau duquel il subit une perte de pression. La basse pression est, quant à elle, de l'ordre de 3 à 4 bar. Par basse pression on entend ici la pression en amont du compresseur 3, entre le deuxième 15 et/ou troisième 21 dispositif de détente et ledit compresseur 3. La pression au sein du condenseur interne 13 est, quant à elle, limitée entre 2 et 5 bar.

En effet, pour un fluide réfrigérant de type inorganique tel que le R744, dans un mode de refroidissement, la haute pression est de l'ordre de 50 à 130 bar. La basse pression est, quant à elle, de l'ordre de 35 à 55 bar. La pression au sein du condenseur interne 13 est, quant à elle, limitée entre 25 et 35 bar.

Ainsi, on voit bien que le circuit climatisation inversible 1 selon l'invention de par son architecture permet un fonctionnement selon une multitude de modes de fonctionnement pouvant s'accorder avec les exigences des constructeurs et les besoins des utilisateurs.

## Revendications

1. Circuit de climatisation inversible (1) dans lequel circule un fluide réfrigérant et comportant :
• une boucle principale (A) comportant dans le sens de circulation du fluide réfrigérant, un compresseur (3), un condenseur d'eau (5) relié conjointement à un circuit annexe dans lequel circule un fluide caloporteur, un premier dispositif de détente (7), un évapo-condenseur externe (9) destiné à être traversé par un flux d'air externe (100), un deuxième dispositif de détente (15), et un évaporateur (17) destiné à être traversé par un flux d'air interne (200),
• une première branche de dérivation (B) comportant un condenseur interne (13) destiné à être traversé par un flux d'air interne (200), ladite première branche de dérivation (B) reliant un premier point de jonction (31) disposé en aval du condenseur d'eau (5), entre ledit condenseur (5) et le premier dispositif de détente (7), à un deuxième point de jonction (32) disposé en amont du deuxième dispositif de détente (15), entre l'évapo-condenseur externe (9) et ledit deuxième dispositif de détente (15),
• une deuxième branche de dérivation (C) reliant un troisième point de jonction (33) disposé en aval de l'évapo-condenseur externe (9), entre ledit évapo-condenseur externe (9) et le deuxième point de jonction (32), à un quatrième point de jonction (34) disposé en aval de l'évaporateur (17), entre ledit évaporateur (17) et le compresseur (3), et
• une troisième branche de dérivation (D) reliant un cinquième point de jonction (35) disposé en aval du troisième point de jonction (33), entre ledit troisième point de jonction (33) et le deuxième point de jonction (32), à un sixième point de jonction (36) disposé en aval du premier point de jonction (31), entre ledit premier point de jonction (31) et le premier dispositif de détente (7),
• la boucle principale (A) comportant un échangeur de chaleur interne (19) configuré pour permettre les échanges de chaleur entre le fluide réfrigérant à des pressions distinctes, ledit échangeur de chaleur interne (19) étant disposé d'une part entre le cinquième (35) et le deuxième (32) point de jonction et d'autre part entre le quatrième point de jonction (34) et le compresseur (3)..

2. Circuit de climatisation inversible (1) selon la revendication 1, **caractérisé en ce qu'**il est configuré pour fonctionner selon un premier mode de refroidissement dans lequel le fluide réfrigérant circule successivement dans le compresseur (3), le condenseur d'eau (5), le premier dispositif de détente (7) qu'il traverse sans perte de pression, l'évapo-condenseur externe (9) au niveau duquel le fluide réfrigérant cède de l'énergie calorifique au flux d'air externe (100), le deuxième dispositif de détente (15) au niveau duquel le fluide réfrigérant subit une perte de pression, l'évaporateur (17) au niveau duquel le fluide réfrigérant absorbe de l'énergie calorifique du flux d'air interne (200) avant de rejoindre le compresseur (3).

3. Circuit de climatisation inversible (1) selon la revendication 1, **caractérisé en ce qu'**il est configuré pour fonctionner selon un premier mode pompe à chaleur dans lequel le fluide réfrigérant circule successivement dans le compresseur (3), le condenseur d'eau (5), la première branche de dérivation (B) au niveau de laquelle le fluide réfrigérant cède de l'énergie calorifique au flux d'air interne (200) via le condenseur interne (13), le fluide réfrigérant passe ensuite par la troisième branche de dérivation (D), le premier dispositif de détente (7) au niveau duquel le fluide réfrigérant subit une perte de pression, l'évapo-condenseur externe (9) au niveau duquel le fluide réfrigérant absorbe de l'énergie calorifique du flux d'air externe (100), le fluide réfrigérant passe ensuite par la deuxième branche de dérivation (C) avant de rejoindre le compresseur (3).

4. Circuit de climatisation inversible (1) selon la revendication 1, **caractérisé en ce qu'**il est configuré pour fonctionner selon un deuxième mode pompe à chaleur dans lequel le fluide réfrigérant circule successivement dans le compresseur (3), le condenseur d'eau (5) au niveau duquel le fluide réfrigérant cède de l'énergie calorifique au fluide caloporteur du circuit annexe, le premier dispositif de détente (7) au niveau duquel le fluide réfrigérant subit une perte de pression, l'évapo-condenseur externe (9) au niveau duquel le fluide réfrigérant absorbe de l'énergie calorifique du flux d'air externe (100), le fluide réfrigérant passe ensuite par la deuxième branche de dérivation (C) avant de rejoindre le compresseur (3).

5. Circuit de climatisation inversible (1) selon la revendication 1, **caractérisé en ce qu'**il est configuré pour fonctionner selon un mode de déshumidification dans lequel le fluide réfrigérant circule successivement dans le compresseur (3), le condenseur d'eau (5), la première branche de dérivation (B) au niveau de laquelle le fluide réfrigérant cède de l'énergie calorifique au flux d'air interne (200) via le condenseur interne (13), le fluide réfrigérant se divise ensuite au niveau du deuxième point de jonction (32) :
• une première partie du fluide réfrigérant passe par la troisième branche de dérivation (D), le premier dispositif de détente (7) au niveau duquel le fluide réfrigérant subit une perte de pression, l'évapo-condenseur externe (9) au niveau duquel il absorbe de l'énergie calorifique du flux d'air externe (100), la deuxième branche de dérivation (C), et
• une deuxième partie du fluide réfrigérant passe par le deuxième dispositif de détente (15) au niveau duquel le fluide réfrigérant subit une perte de pression et par l'évaporateur (17) au niveau duquel le fluide réfrigérant absorbe de l'énergie calorifique du flux d'air interne (200),
les deux parties du fluide réfrigérant se rejoignant au niveau du quatrième point de jonction (34) avant de retourner vers le compresseur (3).

6. Circuit de climatisation inversible (1) selon l'une des revendications précédentes, **caractérisé en ce qu'**il comprend en outre une quatrième branche de dérivation (E) comportant dans le sens de circulation du fluide réfrigérant un troisième dispositif de détente (21) et un refroidisseur (23) relié conjointement à un circuit d'un fluide caloporteur, ladite quatrième branche de dérivation (E) reliant un septième point de jonction (37) disposé en aval du deuxième point de jonction (32), entre ledit deuxième point de jonction (32) et le deuxième dispositif de détente (15) à un huitième point de jonction (38) disposé en aval de l'évaporateur (17), entre ledit évaporateur (17) et le quatrième point de jonction (34).

7. Circuit de climatisation inversible (1) selon la revendication 6, **caractérisé en ce qu'**il est configuré pour fonctionner selon un deuxième mode de refroidissement dans lequel le fluide réfrigérant circule successivement dans le compresseur (3), le condenseur d'eau (5), le premier dispositif de détente (7) qu'il traverse sans perte de pression, l'évapo-condenseur externe (9) au niveau duquel le fluide réfrigérant cède de l'énergie calorifique au flux d'air externe (100), le fluide réfrigérant se divisant au niveau du septième point de jonction (37) :
• une première partie du fluide réfrigérant passant par le deuxième dispositif de détente (15) au niveau duquel le fluide réfrigérant subit une perte de pression et l'évaporateur (17) au niveau duquel le fluide réfrigérant absorbe de l'énergie calorifique du flux d'air interne (200), et
• une deuxième partie du fluide réfrigérant passant par le troisième dispositif de détente (21) au niveau duquel le fluide réfrigérant subit une perte de pression et le refroidisseur (23) au niveau duquel le fluide réfrigérant absorbe de l'énergie calorifique du fluide caloporteur du circuit annexe,
les deux parties du fluide réfrigérant se rejoignant au niveau du huitième point de jonction (38) avant de retourner vers le compresseur (3).

8. Circuit de climatisation inversible (1) selon la revendication 6, **caractérisé en ce qu'**il est configuré pour fonctionner selon un mode de dégivrage dans lequel le fluide réfrigérant circule successivement dans le compresseur (3), condenseur d'eau (5) au niveau duquel le fluide réfrigérant cède de l'énergie calorifique au fluide caloporteur du circuit annexe, le premier dispositif de détente (7) au niveau duquel le fluide réfrigérant subit une première perte de pression, l'évapo-condenseur externe (9) au niveau duquel le fluide réfrigérant cède de l'énergie calorifique afin de dégivrer, en sortie de l'évapo-condenseur externe (9), le fluide réfrigérant passe par le septième point de jonction (37) avant d'aller selon les besoins vers le deuxième dispositif de détente (15) et/ou vers la quatrième branche de dérivation (E) :
• en passant par le deuxième dispositif de détente (15), le fluide réfrigérant subit une deuxième perte de pression et l'évaporateur (17) au niveau duquel le fluide réfrigérant absorbe de l'énergie calorifique du flux d'air interne (200), et
• en passant par le troisième dispositif de détente (21), le fluide réfrigérant subit une deuxième perte de pression et le refroidisseur (23) au niveau duquel le fluide réfrigérant absorbe de l'énergie calorifique du fluide caloporteur du circuit annexe,
le fluide réfrigérant rejoint ensuite le compresseur (3).

9. Circuit de climatisation inversible (1) selon la revendication 6, **caractérisé en ce qu'**il est configuré pour fonctionner selon un mode de démarrage à froid dans lequel le fluide réfrigérant circule successivement dans le compresseur (3), le condenseur d'eau (5) au niveau duquel le fluide réfrigérant cède de l'énergie calorifique au fluide caloporteur du circuit annexe, le premier dispositif de détente (7) au niveau duquel le fluide réfrigérant subit une perte de pression, l'évapo-condenseur externe (9) que le fluide réfrigérant traverse avec peu ou pas de perte d'énergie calorifique, le fluide réfrigérant passant ensuite dans le troisième dispositif de détente (21) que le fluide réfrigérant traverse sans perte de pression et le refroidisseur (23) au niveau duquel le fluide réfrigérant absorbe de l'énergie calorifique du fluide caloporteur du circuit annexe, le fluide réfrigérant rejoignant ensuite le compresseur (3).

## Patentansprüche

1. Invertierbarer Klimatisierungskreislauf (1), in dem ein Kühlfluid fließt und der aufweist:
• eine Hauptschleife (A), die in Fließrichtung des Kühlfluids einen Kompressor (3), einen Wasserverflüssiger (5), der gemeinsam mit einem Nebenkreislauf verbunden ist, in dem ein Wärmeträgerfluid fließt, eine erste Expansionsvorrichtung (7), einen äußeren Verdampfer-Verflüssiger (9), der dazu bestimmt ist, von einem äußeren Luftstrom (100) durchquert zu werden, eine zweite Expansionsvorrichtung (15) und einen Verdampfer (17) aufweist, der dazu bestimmt ist, von einem inneren Luftstrom (200) durchquert zu werden,
• einen ersten Ableitungszweig (B), der einen inneren Verflüssiger (13) aufweist, der dazu bestimmt ist, von einem inneren Luftstrom (200) durchquert zu werden, wobei der erste Ableitungszweig (B) eine erste Verbindungsstelle (31), die dem Wasserverflüssiger (5) zwischen dem Verflüssiger (5) und der ersten Expansionsvorrichtung (7) nachgelagert ist, mit einer zweiten Verbindungsstelle (32) verbindet, die der zweiten Expansionsvorrichtung (15) zwischen dem äußeren Verdampfer-Verflüssiger (9) und der zweiten Expansionsvorrichtung (15) vorgelagert ist,
• einen zweiten Ableitungszweig (C), der eine dritte Verbindungsstelle (33), die dem äußeren Verdampfer-Verflüssiger (9) zwischen dem äußeren Verdampfer-Verflüssiger (9) und der zweiten Verbindungsstelle (32) nachgelagert ist, mit einer vierten Verbindungsstelle (34) verbindet, die dem Verdampfer (17) zwischen dem Verdampfer (17) und dem Kompressor (3) nachgelagert ist, und
• einen dritten Ableitungszweig (D), der eine fünfte Verbindungsstelle (35), die der dritten Verbindungsstelle (33) zwischen der dritten Verbindungsstelle (33) und der zweiten Verbindungsstelle (32) nachgelagert ist, mit einer sechsten Verbindungsstelle (36) verbindet, die der ersten Verbindungsstelle (31) zwischen der ersten Verbindungsstelle (31) und der ersten Expansionsvorrichtung (7) nachgelagert ist,
• wobei die Hauptschleife (A) einen inneren Wärmetauscher (19) aufweist, der konfiguriert ist, die Wärmeaustauschvorgänge zwischen dem Kühlfluid bei unterschiedlichen Drücken zu erlauben, wobei der innere Wärmetauscher (19) einerseits zwischen der fünften (35) und der zweiten (32) Verbindungsstelle und andererseits zwischen der vierten Verbindungsstelle (34) und dem Kompressor (3) angeordnet ist.

2. Invertierbarer Klimatisierungskreislauf (1) nach Anspruch 1, **dadurch gekennzeichnet, dass** er konfiguriert ist, gemäß einem ersten Kühlmodus zu arbeiten, in dem das Kühlfluid nacheinander im Kompressor (3), im Wasserverflüssiger (5), in der ersten Expansionsvorrichtung (7), die es ohne Druckverlust durchquert, im äußeren Verdampfer-Verflüssiger (9), in dessen Bereich das Kühlfluid Wärmeenergie an den äußeren Luftstrom (100) abgibt, in der zweiten Expansionsvorrichtung (15), in deren Bereich das Kühlfluid einen Druckverlust erfährt, im Verdampfer (17) fließt, in dessen Bereich das Kühlfluid Wärmeenergie aus dem inneren Luftstrom (200) absorbiert, ehe es zum Kompressor (3) gelangt.

3. Invertierbarer Klimatisierungskreislauf (1) nach Anspruch 1, **dadurch gekennzeichnet, dass** er konfiguriert ist, gemäß einem ersten Wärmepumpenmodus zu arbeiten, in dem das Kühlfluid nacheinander im Kompressor (3), im Wasserverflüssiger (5), im ersten Ableitungszweig (B) fließt, in dessen Bereich das Kühlfluid Wärmeenergie an den inneren Luftstrom (200) über den inneren Verflüssiger (13) abgibt, das Kühlfluid anschließend den dritten Ableitungszweig (D), die erste Expansionsvorrichtung (7), in deren Bereich das Kühlfluid einen Druckverlust erfährt, den äußeren Verdampfer-Verflüssiger (9) durchfließt, in dessen Bereich das Kühlfluid Wärmeenergie vom äußeren Luftstrom (100) absorbiert, das Kühlfluid anschließend den zweiten Ableitungszweig (C) durchfließt, ehe es zum Kompressor (3) gelangt.

4. Invertierbarer Klimatisierungskreislauf (1) nach Anspruch 1, **dadurch gekennzeichnet, dass** er konfiguriert ist, gemäß einem zweiten Wärmepumpenmodus zu arbeiten, bei dem das Kühlfluid nacheinander im Kompressor (3), im Wasserverflüssiger (5), in dessen Bereich das Kühlfluid Wärmeenergie an das Wärmeträgerfluid des Nebenkreislaufs abgibt, in der ersten Expansionsvorrichtung (7), in deren Bereich das Kühlfluid einen Druckverlust erfährt, im äußeren Verdampfer-Verflüssiger (9) fließt, in dessen Bereich das Kühlfluid Wärmeenergie des äußeren Luftstroms (100) absorbiert, das Kühlfluid anschließend den zweiten Ableitungszweig (C) durchfließt, ehe es zum Kompressor (3) gelangt.

5. Invertierbarer Klimatisierungskreislauf (1) nach Anspruch 1, **dadurch gekennzeichnet, dass** er konfiguriert ist, gemäß einem Entfeuchtungsmodus zu arbeiten, in dem das Kühlfluid nacheinander im Kompressor (3), im Wasserverflüssiger (5), im ersten Ableitungszweig (B) fließt, in dessen Bereich das Kühlfluid Wärmeenergie an den inneren Luftstrom (200) über den inneren Verflüssiger (13) abgibt, das Kühlfluid sich anschließend im Bereich der zweiten Verbindungsstelle (32) teilt:
• ein erster Teil des Kühlfluids durchfließt den dritten Ableitungszweig (D), die erste Expansionsvorrichtung (7), in deren Bereich das Kühlfluid einen Druckverlust erfährt, den äußeren Verdampfer-Verflüssiger (9), in dessen Bereich es Wärmeenergie des äußeren Luftstroms (100) absorbiert, den zweiten Ableitungszweig (C), und
• ein zweiter Teil des Kühlfluids durchfließt die zweite Expansionsvorrichtung (15), in deren Bereich das Kühlfluid einen Druckverlust erfährt, und den Verdampfer (17), in dessen Bereich das Kühlfluid Wärmeenergie des inneren Luftstroms (200) absorbiert,
wobei die zwei Teile des Kühlfluids sich im Bereich der vierten Verbindungsstelle (34) vereinen, ehe sie zum Kompressor (3) zurückkehren.

6. Invertierbarer Klimatisierungskreislauf (1) nach einem der vorhergehenden Ansprüche, **dadurch gekennzeichnet, dass** er außerdem einen vierten Ableitungszweig (E) enthält, der in der Fließrichtung des Kühlfluids eine dritte Expansionsvorrichtung (21) und einen Kühler (23) aufweist, der zusammen mit einem Kreislauf eines Wärmeträgerfluids verbunden ist, wobei der vierte Ableitungszweig (E) eine siebte Verbindungsstelle (37), die der zweiten Verbindungsstelle (32) zwischen der zweiten Verbindungsstelle (32) und der zweiten Expansionsvorrichtung (15) nachgelagert ist, mit einer achten Verbindungsstelle (38) verbindet, die dem Verdampfer (17) zwischen dem Verdampfer (17) und der vierten Verbindungsstelle (34) nachgelagert ist.

7. Invertierbarer Klimatisierungskreislauf (1) nach Anspruch 6, **dadurch gekennzeichnet, dass** er konfiguriert ist, gemäß einem zweiten Kühlmodus zu arbeiten, bei dem das Kühlfluid nacheinander im Kompressor (3), im Wasserverflüssiger (5), in der ersten Expansionsvorrichtung (7), die es ohne Druckverlust durchquert, im äußeren Verdampfer-Verflüssiger (9) fließt, in dessen Bereich das Kühlfluid Wärmeenergie an den äußeren Luftstrom (100) abgibt, wobei das Kühlfluid sich im Bereich der siebten Verbindungsstelle (37) teilt:
• ein erster Teil des Kühlfluids durchfließt die zweite Expansionsvorrichtung (15), in deren Bereich das Kühlfluid einen Druckverlust erfährt, und den Verdampfer (17), in dessen Bereich das Kühlfluid Wärmeenergie des inneren Luftstroms (200) absorbiert, und
• ein zweiter Teil des Kühlfluids durchfließt die dritte Expansionsvorrichtung (21), in deren Bereich das Kühlfluid einen Druckverlust erfährt, und den Kühler (23), in dessen Bereich das Kühlfluid Wärmeenergie des Wärmeträgerfluids des Nebenkreislaufs absorbiert,
wobei die zwei Teile des Kühlfluids im Bereich der achten Verbindungsstelle (38) zusammentreffen, ehe sie zum Kompressor (3) zurückkehren.

8. Invertierbarer Klimatisierungskreislauf (1) nach Anspruch 6, **dadurch gekennzeichnet, dass** er konfiguriert ist, gemäß einem Enteisungsmodus zu arbeiten, bei dem das Kühlfluid nacheinander im Kompressor (3), im Wasserverflüssiger (5), in dessen Bereich das Kühlfluid Wärmeenergie an das Wärmeträgerfluid des Nebenkreislaufs abgibt, in der ersten Expansionsvorrichtung (7), in deren Bereich das Kühlfluid einen ersten Druckverlust erfährt, im äußeren Verdampfer-Verflüssiger (9) fließt, in dessen Bereich das Kühlfluid Wärmeenergie abgibt, um am Ausgang des äußeren Verdampfer-Verflüssigers (9) zu enteisen, das Kühlfluid durchfließt die siebte Verbindungsstelle (37), ehe es je nach Bedarf zur zweiten Expansionsvorrichtung (15) und/oder zum vierten Ableitungszweig (E) geht:
• indem es die zweite Expansionsvorrichtung (15), wo das Kühlfluid einen zweiten Druckverlust erfährt, und den Verdampfer (17) durchfließt, in dessen Bereich das Kühlfluid Wärmeenergie vom inneren Luftstrom (200) absorbiert, und
• indem es die dritte Expansionsvorrichtung (21), wo das Kühlfluid einen zweiten Druckverlust erfährt, und den Kühler (23) durchfließt, in dessen Bereich das Kühlfluid Wärmeenergie des Wärmeträgerfluids des Nebenkreislaufs absorbiert,
anschließend kommt das Kühlfluid zum Kompressor (3) zurück.

9. Invertierbarer Klimatisierungskreislauf (1) nach Anspruch 6, **dadurch gekennzeichnet, dass** er konfiguriert ist, gemäß einem Kaltstartmodus zu arbeiten, in dem das Kühlfluid nacheinander im Kompressor (3), im Wasserverflüssiger (5), in dessen Bereich das Kühlfluid Wärmeenergie an das Wärmeträgerfluid des Nebenkreislaufs abgibt, in der ersten Expansionsvorrichtung (7), in deren Bereich das Kühlfluid einen Druckverlust erfährt, im äußeren Verdampfer-Verflüssiger (9) fließt, den das Kühlfluid mit wenig oder gar keinem Wärmeenergieverlust durchquert, wobei das Kühlfluid anschließend in die dritte Expansionsvorrichtung (21), die das Kühlfluid ohne Druckverlust durchquert, und den Kühler (23) übergeht, in dessen Bereich das Kühlfluid Wärmeenergie des Wärmeträgerfluids des Nebenkreislaufs absorbiert, wobei das Kühlfluid anschließend zum Kompressor (3) gelangt.

## Claims

1. Reversible air-conditioning circuit (1) in which a refrigerant circulates and that includes:
• a main loop (A) including, in the direction of circulation of the refrigerant, a compressor (3), a water condenser (5) jointly connected to an auxiliary circuit in which a heat-transfer fluid circulates, a first expansion device (7), an external evaporator-condenser (9) suitable for being passed through by an external air flow (100), a second expansion device (15), and an evaporator (17) suitable for being passed through by an internal air flow (200),
• a first bypass branch (B) including an internal condenser (13) suitable for being passed through by an internal air flow (200), said first bypass branch (B) connecting a first junction point (31) arranged downstream of the water condenser (5), between said condenser (5) and the first expansion device (7), to a second junction point (32) arranged upstream of the second expansion device (15), between the external evaporator-condenser (9) and said second expansion device (15),
• a second bypass branch (C) connecting a third junction point (33) arranged downstream of the external evaporator-condenser (9), between said external evaporator-condenser (9) and the second junction point (32), to a fourth junction point (34) arranged downstream of the evaporator (17), between said evaporator (17) and the compressor (3), and
• a third bypass branch (D) connecting a fifth junction point (35) arranged downstream of the third junction point (33), between said third junction point (33) and the second junction point (32), to a sixth junction point (36) arranged downstream of the first junction point (31), between said first junction point (31) and the first expansion device (7),
• the main loop (A) including an internal heat exchanger (19) configured to allow heat exchanges between the refrigerant at separate pressures, said internal heat exchanger (19) being arranged both between the fifth (35) and second (32) junction points and between the fourth junction point (34) and the compressor (3).

2. Reversible air-conditioning circuit (1) according to Claim 1, **characterized in that** it is configured to operate in a first cooling mode in which the refrigerant circulates successively in the compressor (3), the water condenser (5), the first expansion device (7), through which it passes without a pressure drop, the external evaporator-condenser (9), where the refrigerant transfers heat energy to the external air flow (100), the second expansion device (15), where the refrigerant experiences a pressure drop, and the evaporator (17), where the refrigerant absorbs heat energy from the internal air flow (200) before returning to the compressor (3).

3. Reversible air-conditioning circuit (1) according to Claim 1, **characterized in that** it is configured to operate in a first heat pump mode in which the refrigerant circulates successively in the compressor (3), the water condenser (5), and the first bypass branch (B), where the refrigerant transfers heat energy to the internal air flow (200) via the internal condenser (13); the refrigerant then passes through the third bypass branch (D), the first expansion device (7), where the refrigerant experiences a pressure drop, and the external evaporator-condenser (9), where the refrigerant absorbs heat energy from the external air flow (100); the refrigerant then passes through the second bypass branch (C) before returning to the compressor (3).

4. Reversible air-conditioning circuit (1) according to Claim 1, **characterized in that** it is configured to operate in a second heat pump mode in which the refrigerant circulates successively in the compressor (3), the water condenser (5), where the refrigerant transfers heat energy to the heat-transfer fluid of the auxiliary circuit, the first expansion device (7), where the refrigerant experiences a pressure drop, and the external evaporator-condenser (9), where the refrigerant absorbs heat energy from the external air flow (100); the refrigerant then passes through the second bypass branch (C) before returning to the compressor (3).

5. Reversible air-conditioning circuit (1) according to Claim 1, **characterized in that** it is configured to operate in a dehumidification mode in which the refrigerant circulates successively in the compressor (3), the water condenser (5), and the first bypass branch (B), where the refrigerant transfers heat energy to the internal air flow (200) via the internal condenser (13); the refrigerant then divides at the second junction point (32) :
• a first portion of the refrigerant passes through the third bypass branch (D), the first expansion device (7), where the refrigerant experiences a pressure drop, the external evaporator-condenser (9), where it absorbs heat energy from the external air flow (100), and the second bypass branch (C), and
• a second portion of the refrigerant passes through the second expansion device (15), where the refrigerant experiences a pressure drop, and through the evaporator (17), where the refrigerant absorbs heat energy from the internal air flow (200),
the two portions of the refrigerant meeting at the fourth junction point (34) before returning to the compressor (3).

6. Reversible air-conditioning circuit (1) according to one of the preceding claims, **characterized in that** it further comprises a fourth bypass branch (E) including, in the direction of circulation of the refrigerant, a third expansion device (21) and a cooler (23) jointly connected to a heat-transfer fluid circuit, said fourth bypass branch (E) connecting a seventh junction point (37) arranged downstream of the second junction point (32), between said second junction point (32) and the second expansion device (15), to an eighth junction point (38) arranged downstream of the evaporator (17), between said evaporator (17) and the fourth junction point (34).

7. Reversible air-conditioning circuit (1) according to Claim 6, **characterized in that** it is configured to operate in a second cooling mode in which the refrigerant circulates successively in the compressor (3), the water condenser (5), the first expansion device (7), through which it passes without a pressure drop, and the external evaporator-condenser (9), where the refrigerant transfers heat energy to the external air flow (100), the refrigerant dividing at the seventh junction point (37):
• a first portion of the refrigerant passes through the second expansion device (15), where the refrigerant experiences a pressure drop, and the evaporator (17), where the refrigerant absorbs heat energy from the internal air flow (200), and
• a second portion of the refrigerant passes through the third expansion device (21), where the refrigerant experiences a pressure drop, and the cooler (23), where the refrigerant absorbs heat energy from the heat-transfer fluid of the auxiliary circuit,
the two portions of the refrigerant meeting at the eighth junction point (38) before returning to the compressor (3).

8. Reversible air-conditioning circuit (1) according to Claim 6, **characterized in that** it is configured to operate in a de-icing mode in which the refrigerant circulates successively in the compressor (3), the water condenser (5), where the refrigerant transfers heat energy to the heat-transfer fluid of the auxiliary circuit, the first expansion device (7), where the refrigerant experiences a first pressure drop, and the external evaporator-condenser (9), where the refrigerant transfers heat energy for de-icing; on leaving the external evaporator-condenser (9), the refrigerant passes through the seventh junction point (37) before going, as required, to the second expansion device (15) and/or to the fourth bypass branch (E):
• passing through the second expansion device (15), the refrigerant experiences a second pressure drop, and the evaporator (17), where the refrigerant absorbs heat energy from the internal air flow (200), and
• passing through the third expansion device (21), the refrigerant experiences a second pressure drop, and the cooler (23), where the refrigerant absorbs heat energy from the heat-transfer fluid of the auxiliary circuit; the refrigerant then returns to the compressor (3).

9. Reversible air-conditioning circuit (1) according to Claim 6, **characterized in that** it is configured to operate in a cold start mode in which the refrigerant circulates successively in the compressor (3), the water condenser (5), where the refrigerant transfers heat energy to the heat-transfer fluid of the auxiliary circuit, the first expansion device (7), where the refrigerant experiences a pressure drop, and the external evaporator-condenser (9), through which the refrigerant passes with little or no loss of heat energy, the refrigerant then passing into the third expansion device (21), through which the refrigerant passes without a pressure drop, and the cooler (23), where the refrigerant absorbs heat energy from the heat-transfer fluid of the auxiliary circuit, the refrigerant then returning to the compressor (3).
